## Europäisches Patentamt

## European Patent Office

## Office européen des brevets

(19)

(11) Veröffentlichungsnummer: **0 082 991**
**B1**

(12) **EUROPÄISCHE PATENTSCHRIFT**

(45) Veröffentlichungstag der Patentschrift:
02.05.85

(21) Anmeldenummer: 82111249.7

(22) Anmeldetag: 04.12.82

(51) Int. Cl.⁴: **B 66 C 23/84**, E 02 F 9/12,
F 16 C 35/04

(54) Sicherheitsbefestigung bei Grosswälzlagern für insbesondere Bagger und Krane.

(30) Priorität: 24.12.81 DE 3151277

(43) Veröffentlichungstag der Anmeldung:
06.07.83 Patentblatt 83/27

(45) Bekanntmachung des Hinweises auf die Patenterteilung:
02.05.85 Patentblatt 85/18

(84) Benannte Vertragsstaaten:
AT BE CH DE FR GB IT LI LU NL SE

(56) Entgegenhaltungen:
DE - A - 2 011 141
DE - B - 1 129 117
FR - A - 2 267 476
GB - A - 2 021 518
US - A - 1 765 967
US - A - 1 929 397
US - A - 3 445 146
US - A - 3 937 540
US - A - 4 011 955

(73) Patentinhaber: Hoesch Aktiengesellschaft,
Eberhardstrasse 12, D-4600 Dortmund 1 (DE)

(72) Erfinder: Andree, Dietrich, Ing. grad., Sadelhof 1,
D-4600 Dortmund 70 (DE)
Erfinder: Giesser, Otto, Rahmkesweg 14,
D-4600 Dortmund 50 (DE)

ACTORUM AG

## Beschreibung

Die Erfindung betrifft eine Sicherheitsbefestigung bei Grosswälzlagern für insbesondere Bagger und Krane, mit am Umfang angeordneten Rückhalteeinrichtungen und Befestigungsmitteln, die die Lagerringe mit den Anschlusskonstruktionen verbinden.

Derartige Sicherheitsbefestigungen werden bei sich drehenden Maschinen eingesetzt, um sicherzustellen, dass auch im unvorhersehbaren Katastrophenfall, z.B. bei einem Bruch der Drehverbindung, keine Gefährdung der Umgebung erfolgt und z.B. eine Winkelverlagerung der Anschlusskonstruktionen vermieden wird.

Das DE-U Nr. 7914922 zeigt eine derartige Sicherheitsbefestigung, die den Drehbereich eines Kranes segmentförmig umgreift und im Katastrophenfall vermeidet, dass das drehbare Oberteil des Kranes sich durch einen Bruch des Wälzlagers vom feststehenden Unterteil des Kranes lösen kann.

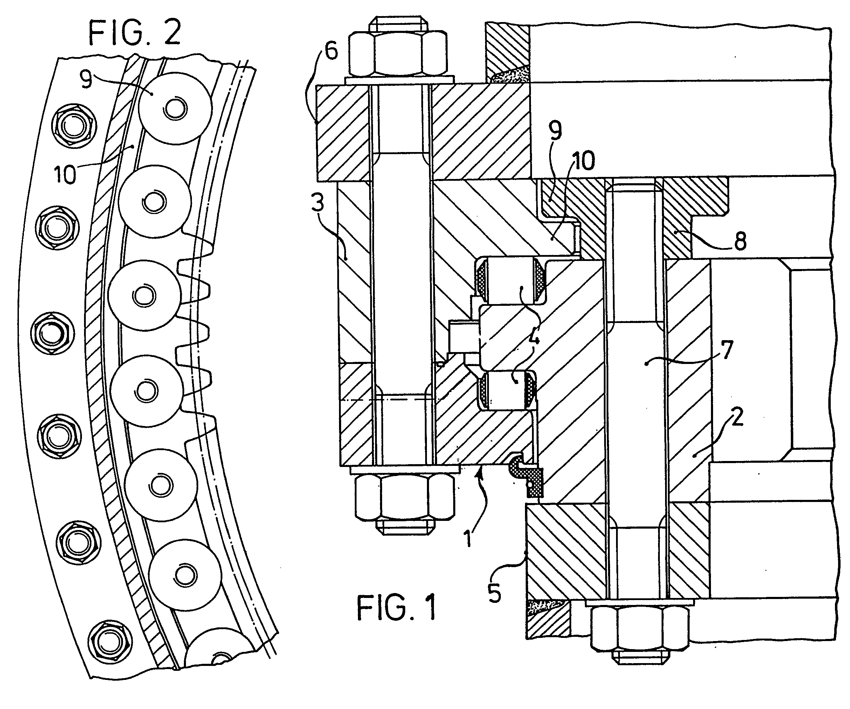

In der Zeitschrift „Deutsche Hebe- und Fördertechnik", Ausgabe 12/1977, S. 607, wird in Abb. 2 eine Fanghakenvorrichtung gezeigt, die seitlich am Lagerring und ringförmig um das Lager angeordnet ist.

Derartige Sicherheitsbefestigungen erfordern zusätzliche, mindestens segmentförmige Bauteile sowie einen hohen Material- und Platzbedarf.

Der Erfindung liegt die Aufgabe zugrunde, eine Sicherheitsbefestigung zu schaffen, bei der insbesondere die Anzahl der Zusatzelemente herabgesetzt sowie Materialaufwand und Platzbedarf vermindert werden und trotzdem eine hohe Betriebssicherheit gewährleistet ist.

Diese Aufgabe wird bei einer Sicherheitsbefestigung der eingangs näher bezeichneten Gattung erfindungsgemäss dadurch gelöst, dass die Befestigungsmittel eines Lagerringes als Rückhalteeinrichtung ausgebildet sind und mit dem anderen Lagerring formschlüssig verbunden sind.

Gemäss einem weiteren Merkmal der Erfindung weist der andere Lagerring für die formschlüssige Verbindung vorzugsweise einen Kragen auf.

In weiterer Ausgestaltung des Erfindungsgedankens können Befestigungsmuttern mit einem Bund oder Befestigungsbolzen mit einem Bolzenbund angeordnet sein. Es ist weiterhin auch möglich, dass die Befestigungsbolzen einen den anderen Lagerring übergreifenden, vorzugsweise segmentartig ausgebildeten Rückhaltering halten. Dabei kann zweckmässigerweise der Rückhaltering mit Gewindebohrungen direkt mit den Befestigungsbolzen verbunden sein.

Die mit der Erfindung erzielten Vorteile bestehen insbesondere darin, dass durch die möglichst nahe Anordnung am Laufbahnbereich die Befestigungsmittel überraschenderweise im Katastrophenfall ein geringeres Biegemoment zu übertragen haben als vor einem eventuellen Lagerbruch. Weiterhin werden vorteilhaft für die Sicherheitsbefestigung keine zusätzlichen Bauteile benötigt, da die bereits vorhandenen Befestigungselemente, eventuell als Dehnschrauben ausgebildet, zwischen den Lagerringen und den Anschlusskonstruktionen durch die erfindungsgemässe Ausbildung die Funktion einer Rückhalteeinrichtung übernehmen. Ferner sind auch keine zusätzlichen Montagearbeiten erforderlich.

Die erfindungsgemässe Sicherheitsbefestigung ist weiterhin auf dem gesamten Umfang wirksam, so dass im Katastrophenfall die Drehverbindung an jeder Stelle des Umfanges mit der gleichen vorteilhaften Wirkung abgefangen werden kann.

Nachfolgend ist die Erfindung anhand von in den Zeichnungen schematisch dargestellten Ausführungsbeispielen näher beschrieben.

Im einzelnen zeigen von dem Befestigungsbereich einer erfindungsgemässen Sicherheitsbefestigung

Fig. 1 einen Teilschnitt bei Verwendung von Befestigungsmuttern mit Bund,

Fig. 2 die zugehörige Teildraufsicht,

Fig. 3 einen Teilschnitt bei Verwendung von Befestigungsbolzen mit Bolzenbund,

Fig. 4 die zugehörige Teildraufsicht,

Fig. 5 einen Teilschnitt bei Verwendung eines Rückhalteringes, und

Fig. 6 die zugehörige Teildraufsicht.

Das Grosswälzlager 1 besteht jeweils aus einem inneren Lagerring 2 und einem äusseren Lagerring 3 mit dazwischen angeordneten Wälzkörpern 4. Am inneren Lagerring 2 ist die untere Anschlusskonstruktion 5, z.B. das feststehende Unterteil eines Kranes, und am äusseren Lagerring 3 die obere Anschlusskonstruktion 6, z.B. das drehbare Oberteil eines Kranes, befestigt.

Gemäss Fig. 1 werden die Befestigungsbolzen 7 des inneren Lagerringes 2 mit Befestigungsmuttern 8 verschraubt. Diese übergreifen mit ihrem Bund 9 mit einem vorgegebenen Abstand formschlüssig den Kragen 10 des äusseren Lagerringes 3.

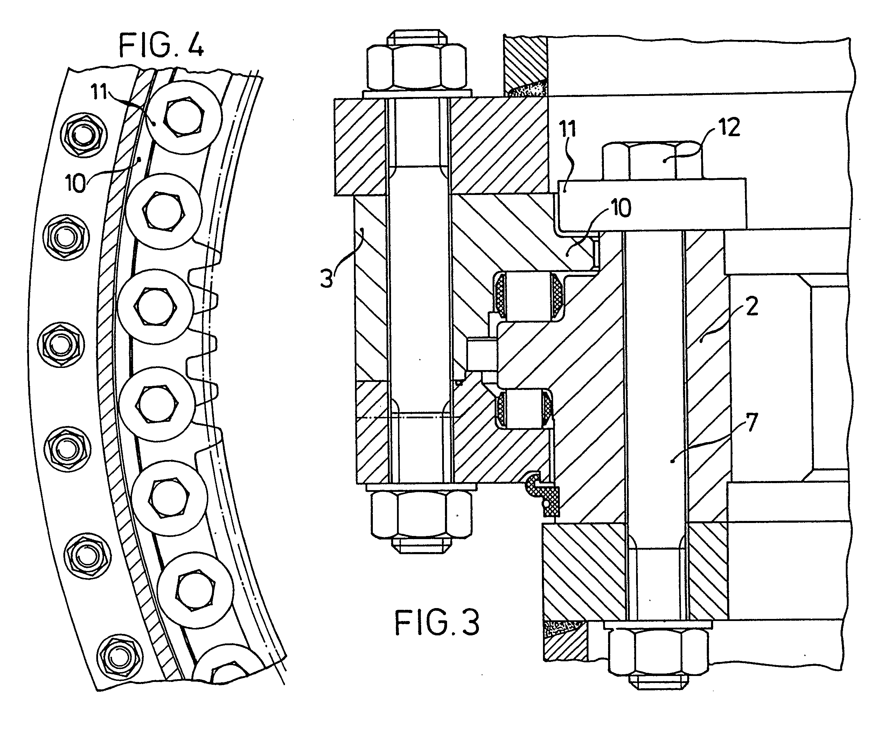

Bei der Ausbildung nach Fig. 3 haben die Befestigungsbolzen 7 des inneren Lagerringes 2 einen Bolzenbund 11, der den Kragen 10 des äusseren Lagerringes 3 formschlüssig im vorgegebenen Abstand übergreift. Der Bolzenbund 11 ist mit einem Aussensechskant 12 für einen Schraubenschlüssel versehen.

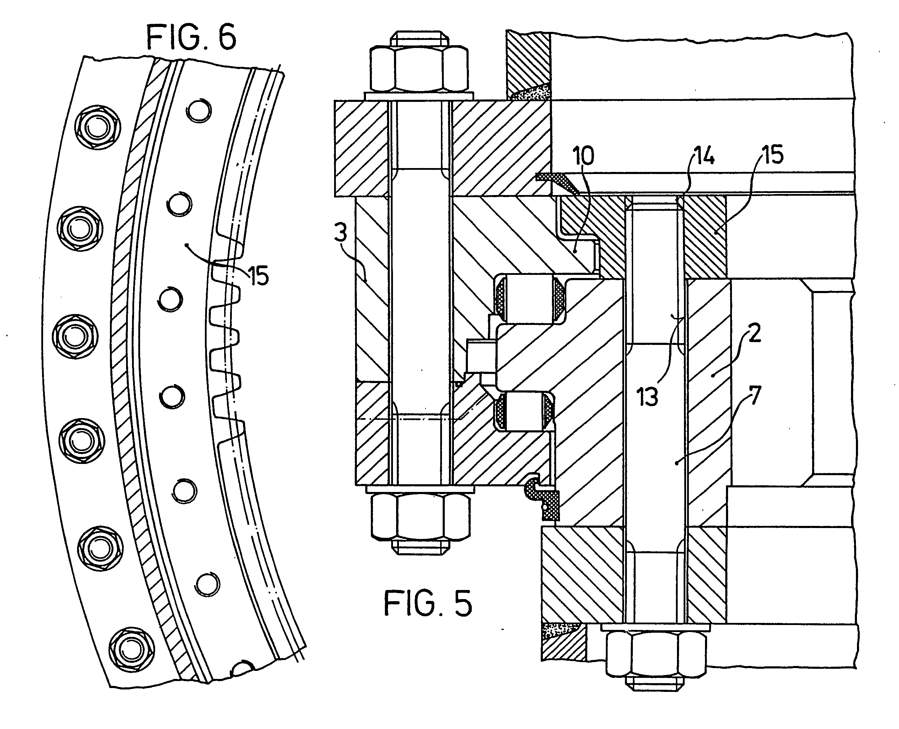

Im Ausführungsbeispiel nach Fig. 5 ist an den Befestigungsbolzen 7 ein Aussengewinde 13 angeordnet, das in die Gewindebohrung 14 eines Rückhalteringes 15, der aus einzelnen Segmenten zusammengesetzt sein kann, eingeschraubt ist. Der Rückhaltering 15 übergreift im vorgegebenen Abstand einen am äusseren Lagerring 3 angeordneten Kragen 10.

1 Grosswälzlager
2 Lagerring, innerer
3 Lagerring, äusserer
4 Wälzkörper
5 Anschlusskonstruktion, untere
6 Anschlusskonstruktion, obere
7 Befestigungsbolzen
8 Befestigungsmutter
9 Bund
10 Kragen
11 Bolzenbund
12 Aussensechskant

13  Aussengewinde
14  Gewindebohrung
15  Rückhaltering

## Patentansprüche

1. Sicherheitsbefestigung bei Grosswälzlagern für insbesondere Bagger und Krane mit am Umfang angeordneten Rückhalteeinrichtungen und Befestigungsmitteln, die die Lagerringe (2, 3) mit den Anschlusskonstruktionen (5, 6) verbinden, dadurch gekennzeichnet, dass die Befestigungsmittel (7, 8 bzw. 11, 15) eines Lagerringes (2) als Rückhalteeinrichtung ausgebildet und mit dem anderen Lagerring (3) formschlüssig verbunden sind.

2. Sicherheitsbefestigung nach Anspruch 1, dadurch gekennzeichnet, dass der andere Lagerring (3) einen Kragen (10) aufweist.

3. Sicherheitsbefestigung nach den Ansprüchen 1 und 2, dadurch gekennzeichnet, dass Befestigungsmuttern (8) mit einem Bund (9) angeordnet sind.

4. Sicherheitsbefestigung nach den Ansprüchen 1 und 2, dadurch gekennzeichnet, dass Befestigungsbolzen (7) mit einem Bolzenbund (11) angeordnet sind.

5. Sicherheitsbefestigung nach den Ansprüchen 1 und 2, dadurch gekennzeichnet, dass die Befestigungsbolzen (7) einen den anderen Lagerring (3) übergreifenden, vorzugsweise segmentartig ausgebildeten Rückhaltering (15) halten.

6. Sicherheitsbefestigung nach Anspruch 5, dadurch gekennzeichnet, dass der Rückhaltering (15) mit Gewindebohrungen direkt mit den Befestigungsbolzen (7) verbunden ist.

## Claims

1. A safety fastening device in a large roller bearing, especially for excavators and cranes, with peripheral restraining devices and fastening means which connect the bearing rings (2, 3) with the connection structures (5, 6), characterised in that the fastening means (7, 8 or 11, 15) of one bearing ring (2) are formed as a restraint device and are interfittingly connected with the other bearing ring (3).

2. A safety fastening device according to Claim 1, characterised in that the other ring bearing (3) has a collar (10).

3. A safety fastening device according to Claims 1 and 2, characterised in that lock nuts (8) with a shoulder (9) are provided.

4. A safety fastening device according to Claims 1 and 2, characterised in that fastening bolts (8) with a bolt shoulder (11) are provided.

5. A safety fastening device according to Claims 1 and 2, characterised in that the fastening bolts (7) hold a restraining ring (15), preferably segmented, which overlaps the other ring bearing (3).

6. A safety fastening device according to Claim 5, characterised in that the restraining ring (15) is connected directly to the clamping bolts (7) through threaded holes.

## Revendications

1. Fixation de sécurité pour couronnes d'orientation, en particulier pour excavateurs et grues, comportant à la périphérie des dispositifs de retenue et de fixation qui relient les bagues du palier (2, 3) au système d'assemblage (5, 6), caractérisée en ce que les moyens de fixation (7, 8 ou 11, 15) d'une bague de palier (2) sont réalisés sous la forme d'un moyen de retenue et sont reliés mécaniquement à l'autre bague de palier (3).

2. Fixation de sécurité selon la revendication 1, caractérisée en ce que l'autre bague de palier (3) présente un collet (10).

3. Fixation de sécurité selon les revendications 1 et 2, caractérisée en ce que des écrous de fixation (8) sont pourvus d'une embase (9).

4. Fixation de sécurité selon les revendications 1 et 2, caractérisée en ce que des vis de fixation (7) sont pourvues d'une embase (11).

5. Fixation de sécurité selon les revendications 1 et 2, caractérisée en ce que les vis de fixation (7) maintiennent une bague de retenue (15), réalisée de préférence en segments, entourant l'autre bague de palier (3).

6. Fixation de sécurité selon la revendication 5, caractérisée en ce que la bague de retenue (15) comportant des alésages filetés est reliée directement aux vis de fixation (7).

FIG. 1

FIG. 2

FIG.3

FIG.4

FIG. 5

FIG. 6